# EUROPEAN PATENT APPLICATION

(11) **EP 1 912 394 A1**
(43) Date of publication of application: **16.04.2008**
(21) Application number: 06301029.2
(22) Date of filing: 09.10.2006
(51) Int. Cl.: H04L 12/58, H04L 29/08

(54) **Management of access to address data**

(71) Applicant: Hewlett-Packard Development Company, L.P., Houston, TX 77070 (US)
(72) Inventor: Bertin, Olivier, 06901 Sophia-Antipolis (FR); Caradec, Jean-Philippe, 38053 Grenoble Cedex 09 (FR); Lamberton, Marc, 06901 Sophia-Antipolis (FR)
(74) Representative: Franks, Adam Peter

(57) **Abstract**

Embodiments of the invention comprise a method of managing access to address data that is accessible via a plurality of communication devices; the method comprising the steps of establishing at least one access rule, associated with at least one communication device of the plurality of communication devices, for influencing access to the address data; and controlling access to the address data according the at least one access rule associated with the at least one communication device.

## Description

### Field of the Invention

The present invention relates to a data processing system and method.

### Background to the Invention

Many communication systems allow a user to specify a list of contact details and associated addresses, that is, address data containing addresses. This allows the user to remember a piece of information such as, for example, a contact's name, rather than a contact's address, which may be of a more abstract nature and more difficult to remember. A list of contact details or data is known as a "contacts list" or a "buddy list." A user may add contact details to or delete contact details from their contact list. Communication systems that allow a user to specify a contact list include, for example, mobile telephones, email programs, instant messenger programs and voice over IP (VoIP) programs.

In this description, an address is used by the appropriate communications system to allow a user to communicate with a contact at that address. For example, in an email communications system, an address typically has the form user@example.com in accordance with the Internet Engineering Task Force RFCs.

In some cases, the user's contact list is stored on a remote server. This allows the user to be presented with their contact list, even if the user uses a terminal (for example, a mobile phone, personal computer (PC) loaded with an instant messenger program or VoIP handset) that the user does not normally use.

Some communication systems allow the user to specify groups. A group is a list of contact details of a specific type. For example, a user may specify a group in which the contact details are the user's friends, and another group in which the contact details are the user's work colleagues. A user may typically specify any number of groups, and each group may contain any number or type of contact details. A contact may have respective details that are also present in multiple groups.

With some communication systems, a user may share a contact list or group with another user. To achieve this, a copy of the contact list or group containing the details such as, for example, the names and addresses, of respective contact in the list or group is sent to the other user. The original user and the other user each then own separate, initially identical copies of the contact list or group. The two copies are subsequently treated as separate, disparate lists or groups, and each user may amend their version of the list or group as appropriate. As a result, the separate copies may contain different contacts and, as a result, the separate copies may not relate to the same group of contacts.

It is an object of embodiments of the invention to at least mitigate one or more of the problems of the prior art.

### Summary of the Invention

According to a first aspect of embodiments of the invention, there is provided a method of managing access to address data that is accessible via a plurality of communication devices; the method comprising the steps of at least one of accessing or establishing at least one access rule, associated with at least one communication device of the plurality of communication devices, for influencing access to the address data; and controlling access to the address data according to the at least one access rule associated with the at least one communication device.

Advantageously, a contact list or group containing contact data may be shared between multiple users such that each user has access to the address data. Each user may access the address data, and multiple copies thereof may be avoided. As multiple copies of the address data are avoided, each user will have access to the most recent address data.

Embodiments can be realised in which there is provided a method in which the steps of at least one of accessing or establishing at least one access rule associated with the at least one communication device comprises the steps of at least one of accessing or establishing a plurality of access rules selectively associated with respective communication devices of the plurality of communication devices. Suitably, any given contact data within the address data may have one or more associated access rights or privileges and different contact data can have respective access rules.

It can be problematical if communication devices having access to the access data have unfettered access. Suitably, embodiments can be realised in which the at least one access rule influences at least one of (a) reading at least a portion of the address data, (b) writing to the address data, (c) modifying at least a portion of the address data, (d) deleting at least a portion of the address data, (e) distributing at least a portion, or the whole, of the address data, and (f) updating the address data.

An embodiment can be realised that comprise the step of associating the at least one access rule with a communication device having contact data that has been added to, or at least being intended to be added to, the address data.

Preferably, once contact data has been added to the address data, the newly added contact is notified of their addition to the address data and assigned access rules according to the wishes of the owner of the access data or the address data. Suitably, embodiments provide a method comprising sending a message to at least one communication device of the plurality of communication devices; the message bearing an indication that the contact data of the communication device has been added to the address data.

In an embodiment, the address data is realised using XML. Suitably, the address data can be accessed and/or manipulated using XML document manipulation tools, such as, for example, XML Configuration Access Protocol (XCAP).

In certain embodiments, the address data associated with the at least one access rule indicates, for at least one user, access rights to the address data. The at least one access rule is, therefore, kept separate from the address data itself. The access rule or rules may, in certain embodiments, be stored on a server that is separate from a server storing the address data. In certain embodiments, the access rule or rules are expressed in a portable, communication device independent, form such as, for example, using XML. The XML can then be accessed and/or manipulated using XML document manipulation tools, such as, for example, XML Configuration Access Protocol (XCAP).

Using embodiments of the present invention, a user of user equipment such as, for example, a mobile telephone, can access the address data owned by another user and communicate with a contact whose contact details or data are embodied within the address data. Therefore, for example, a user may communicate with a contact identified by respective contact data contained within a group or contact list associated with the address data, even if the user does not own the address data.

In certain embodiments, the method comprises receiving a message from an owner of the address data indicating that the address data has been shared by the owner. Therefore, the user receiving the message knows that the address data has been shared, and the user may have rights to access the address data. The message may, for example, contain information that allows the user to identify the address data.

In certain embodiments, accessing the address data comprises downloading the address data from a server. Therefore, for example, the user downloading the address data can then read one or more contact data from the address data and communicate with one or more contacts associated with the contact data contained with the address data. In certain embodiments, the server is associated with the owner of the address data. Therefore, for example, a user who is not the owner of the address data can access the representation even if the address data is not stored on a server associated with the user accessing the address data. For example, if the owner and the accessing user are associated with different mobile telephone networks, where each network implements its own servers, the accessing user can still access the address data owned by the owner.

A further aspect of embodiments of the present invention provides a system for managing access to address data that is accessible via a plurality of communication devices; the system comprising means to at least one of access or establish at least one access rule, associated with at least one communication device of the plurality of communication devices, means to influence access to the address data; and means to control access to the address data according to the at least one access rule associated with the at least one communication device.

Embodiments provide a system in which the means to at least one of access or establish at least one access rule associated with the at least one communication device comprises means to at least one of access or establish a plurality of access rules selectively associated with respective communication devices of the plurality of communication devices.

Embodiments provide a system in which the at least one access rule influences at least one of (a) reading at least a portion of the address data, (b) writing to the address data, (c) modifying at least a portion of the address data, (d) deleting at least a portion of the address data, (e) distributing at least a portion, or the whole, of the address data, and (f) updating the address data.

Embodiments provide a system further comprising means to associate the at least one access rule with a communication device having contact data that has been added to, or at least being intended to be added to, the address data.

Embodiments provide a system comprising means to send a message to at least one communication device of the plurality of communication devices; the message bearing information associated with at least one of contact data associated with, or to be associated with, the address data and data associated with, or representing, at least one access rule associated, or to be associated, with the at least one contact data.

Embodiments provide a system comprising means to create the address data including means to express the address data in a portable, communication device independent, data structure. For example, the means to express the address data in a portable, communication device independent, data structure may comprise means to express the address data using XML within an XML data structure.

Embodiments provide a system comprising means to maintain the address data in response to receiving a message comprising an instruction for managing the address data.

Embodiments provide a system comprising means to define at least one property associated with at least one of the address data and contact data for influencing interactions with the address data or contact data. Preferably, the means to define at least one property associated with the address or contact data comprises means to define at least one restriction associated with the address or contact data.

### Brief Description of the Drawings

Embodiments of the invention will now be described by way of example only, with reference to the accompanying drawings, in which:
figure 1 shows an example of two communication networks;
figure 2 shows an embodiment of a group containing contact data;
figure 3 shows an example of an implementation of the group containing contact data expressed in XML;
figure 4 shows an embodiment of access rules;
figure 5 shows an example of an implementation of the access rules expressed in XML; and
figure 6 shows an example of message exchanges within the networks of figure 1 according to embodiments of the invention.

### Detailed Description of Embodiments of the Invention

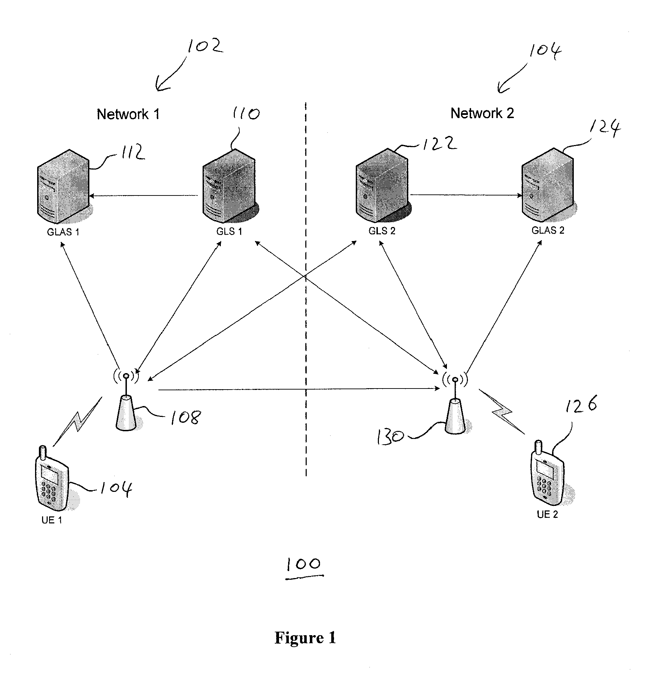

Figure 1 shows an example of a communications system 100 according to an embodiment of the invention. The communications system 100 includes a first network 102 that includes first user equipment (UE) 104. The user equipment 104 is an embodiment of a communication device that a user may use to communicate with other users in the network 102 or other networks. In figure 1, the user equipment 104 is, for example, a mobile telephone. However, the user equipment 104 may be one of a number of communication devices that include, for example, mobile telephones, residential gateways, VoIP handsets and PCs loaded with instant messenger programs and/or email programs. The user equipment may be able to communicate using one or more of a number of methods, including voice, text and/or video communication via one or more communication protocols.

The mobile telephone 104 can communicate wirelessly with the rest of the network 102 via a mobile base station 108. The mobile base station 108 may be omitted where the user equipment 104 does not include a mobile telephone. The first network 102 also includes a groups and lists server (GLS) 110 and a groups and lists access server (GLAS) 112. The mobile telephone 106 can communicate with the GLS 110 and GLAS 112 via the base station 108. Communication between the base station 108 and the mobile telephone can be via an suitable air-interface forming part of the GSM or CDMA standards such as, for example IS-95. One skilled in the art appreciates that a communication device may access the network or communication with other communication devices without using a base station. For example, if the communication device is a 802.11 enabled computer, the base station 108 may be replaced with a suitable 802.11 enabled access point or any other wireless access point. Similarly, the communication device may be a computer connected to a wired network. In such a case, there is, again, no need for the base station 108.

The groups and lists server (GLS) 110 maintains at least one representation of groups and contact lists of the user of the mobile telephone 106. The representation of groups and contact lists is an embodiment of address data. However, embodiments of the address data are not limited thereto.

The user of the mobile telephone may be, for example, the owner of the mobile telephone, or may additionally or alternatively be the user of a communications service, where the user is using the mobile telephone 106 to access the service. The user is the owner of the groups and contact lists of the user stored on the GLS 110. The owner of a group or contact list may add contacts to the group or list, delete contacts from the group or list and share the group or list with others. The group or list is stored on a GLS that is associated with the user. The GLS may store zero, one or more groups and/or lists. The GLS may be associated with zero, one or more users. Each user may store zero, one or more groups and/or list on a GLS, or on more than one GLS.

The user may create and delete contact lists and groups, and add and remove contacts from the lists and groups, by sending communications or instructions to that effect to the GLS 110. In this way, the user can maintain the user's groups and contact lists. It will be appreciated that such communications or instructions represent embodiments of a message comprising an instruction for managing the address data.

The groups and lists access server 112 maintains access rights for the user's groups and contact lists. The access rights for a group or list specify users, which may or may not include the user who is the owner of the group or list, who can access the group or list. The rights may include, for example, read access, where a user can access the address data and details of the contact data in the list or group, write access, where a user can add contact data to the group and/or amend existing contact data and/or other details and/or properties of the group, and sharing, where a user may share the list or group with other users. Different users may have different rights to the list or group. One skilled in the art will appreciate that the access rights can be embodied as access rules for influencing or managing user interactions with the address data.

A second network 120 includes a GLS 122, GLAS 124 and user equipment 126. The user equipment comprises, for example, a mobile telephone 126 that can communicate with other communication devices via a station 130. The user equipment 126 may communicate with the GLS 122 and the GLAS 124. The GLS 122 stores groups and lists associated with the user of the user equipment 126. The GLAS 124 stores access rights for the user's groups and lists stored on the GLS 122.

The first and second networks 102 and 120 are linked so that the user equipment 104 of the first network 102 may communicate with the GLS 122, GLAS 124 and user equipment 126 of the second network. Similarly, the user equipment 126 of the second network 120 may communicate with the GLS 110, GLAS 112 and user equipment 104 of the first network 104.

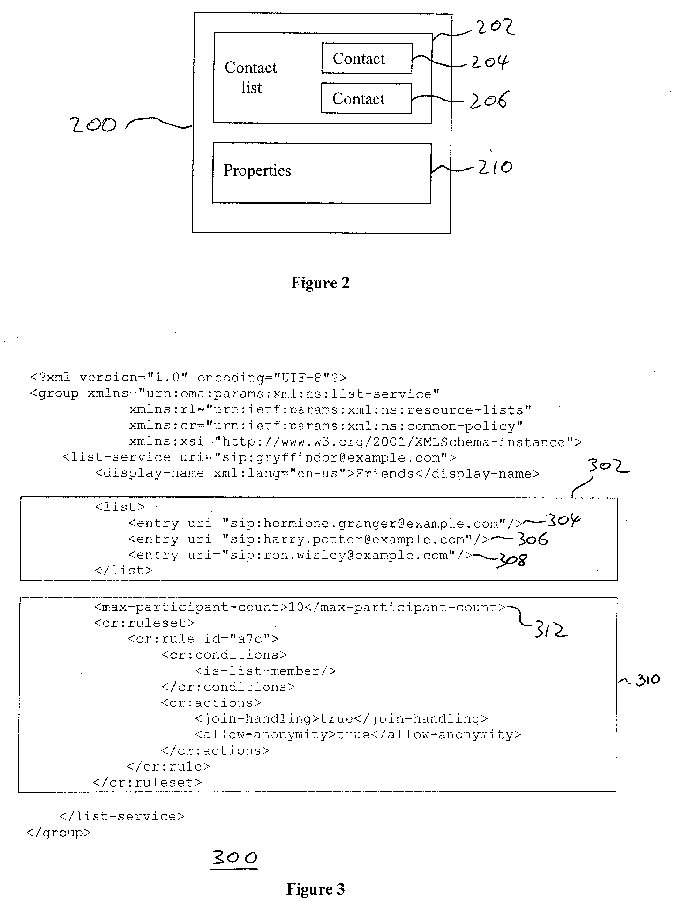

Figure 2 shows an example of address data 200 of a group of contacts. The address data 200 includes a contact list 202 that contains contact data of 204 and 206 two contacts. The contact data 204 and 206 may include information sufficient to communicate with the contact, such as, for example, a contact address, and any other information that the user who owns the address data 200 wishes to include. Figure 2 shows only two contact data 204 and 206 as an example, although the address data 200 may contain contact data for some other number of contacts.

The address data 200 may also include, if appropriate, properties 210 that specify details of the address data and/or the group or contact data associated with the address data as appropriate.

It will be appreciated that at least one of the contact list 202, contact data 204 and 206 and properties 210 and any combination thereof, represent embodiments of portions of address data.

Figure 3 shows an example of an implementation 300 of the address data 200 of figure 2. The address data is preferably implemented in a portable, communication device independent, manner. For example, the address data 200 can be expressed using XML. The address data 300 includes a contact list 302 that contains contact data 304, 306 and 308 for three contacts. The contact data specifies the addresses of communication devices of the three contacts. For example, the contact data 308 specifies the address ron.wisley@example.com. The owner of the address data 300 is the user with the address hermione.granger@example.com. The owner's contact data 304 is included in the address data 300. This will allow users other than the owner to contact the owner when they access the address data 300, provided that they have rights to read the address data 300.

The address data 300 also includes properties 310. The properties 310 include, for example, a property 312 governing the maximum number of participants that may participate simultaneously in a single discussion. In the illustrated embodiment, for example, the property 310 indicates that, for the group, the maximum number of participants to a discussion is 10. One skilled in the art appreciates that such a property 310 is an embodiment of a restriction that applies to the address data.

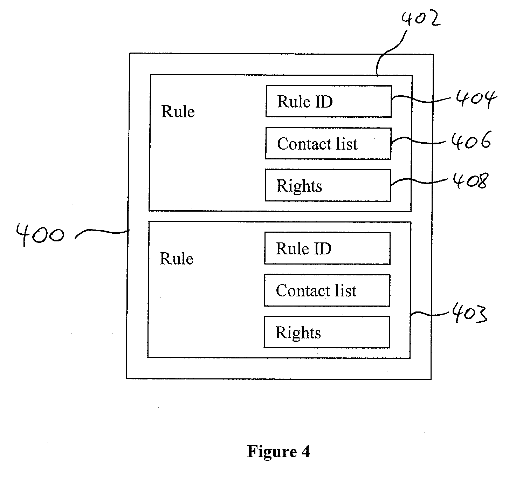

Figure 4 shows an embodiment of access rules 400 expressing access rights. The embodiment of the access rules 400 is associated with address data 300 of a group of contacts, and is stored on a groups and lists access server (GLAS), such as the GLAS 112 of figure 1. The association between the embodiment of access rules 400 and address data 300 can be made using, for example, filenames of one or both of the address data 300 and the embodiment of the access rules 400, location (for example, directory) on the appropriate server, and/or information stored within one or both of the address data 300 and the access rules 400, and/or any other suitable way of forming an association between the two. The embodiment of the access rules 400 contains access rights for users to access the associated address data 300.

The embodiment of the access rules 400 includes rules 402 and 403. Two rules 402 and 403 are shown as an example, although some other number of rules may be realised. Each rule, for example rule 402, contains a rule ID 404 for identifying the rule 402, contact list 406 and rights 408. The rule ID 404 is unique to each rule within the embodiment of the access rules 400. If the embodiment of the access rules 400 is implemented as an XML document, the presence of the rule ID ensures that the XML document conforms to one or more standards specified by the Open Mobile Alliance (OMA). It also ensures that the XML document can be manipulated using, for example, XML Configuration Access Protocol (XCAP), http://www.ietf.org/internet-drafts/draft-ietf-simple-xcap-11.txt. XCAP can be used, for example, to read and/or modify individual rules in the XML implementation of embodiment of the access rules 400.

The contact list 406 contains contact data of one or more contacts to which the rule applies. Each rule may apply to zero, one or more contact data, and each contact data may have zero, one or more rules that apply to that contact data. The contact data can be identified, for example, in the same manner in which they are identified in the group representation 300, although it is not necessary for the contact data in the contact list 406 also to appear in the address data 300. For example, the contact data in the contact list 406 may be provided as the addresses of contacts.

The rights 408 indicate the access rights of the contacts associated with the contact data in the contact list 406 to access the address data 300. For example, the rights 408 may indicate that the contacts associated with the contact data in the contact list 406 may read from, write to and/or share the address data 300.

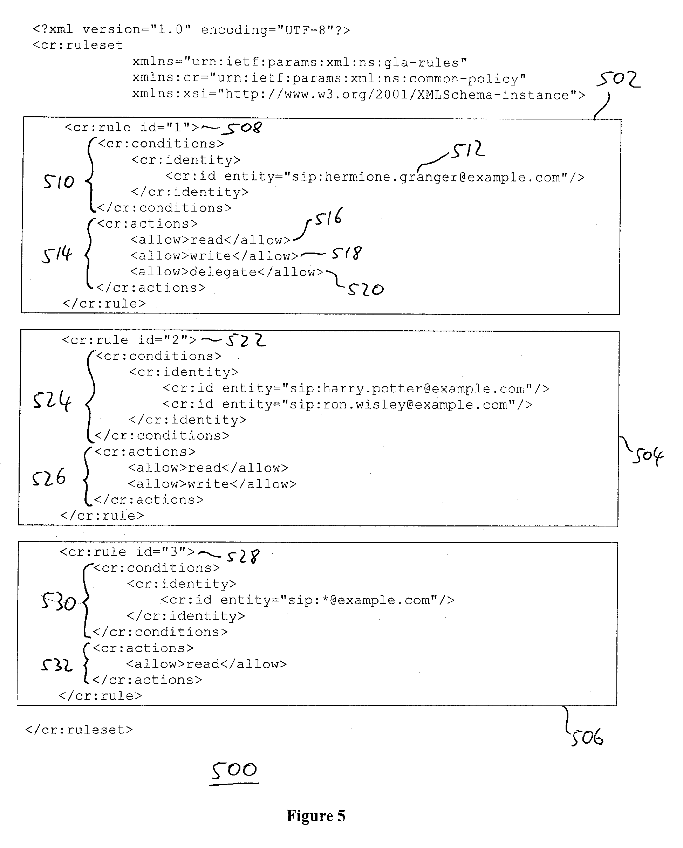

Figure 5 shows an example of an XML implementation 500 of the embodiment of the access rules 400. The XML implementation 500 includes three rules 502, 504 and 506. Rule 502, for example, includes a rule ID 508 that is implemented as an XML attribute called "id" having a value of "1" within the start tag of the "cr:rule" element that defines the rule 502. The rule ID 508 is unique within the representation 500. The rule 502 also includes a contact list 510 that contains contact data of a single contact 512. The contact data is hermione.granger@example.com, which is also found within the address data 300 shown in figure 3. The rule 502 includes rights 514. The rights conferred on the contact associated with the contact data hermione.granger@example.com by the rule 502 are read 516, write 518 and delegate 520. These are the right to read from, to write to and to share the address data 300 respectively.

The rule 504 includes an ID 522 of "2" and a contact list 524 that specifies contact data, harry.potter@example.com and ron.wisley@example.com, associated with two contacts. The rights 526 in the rule 504 specify that the two users specified in the contact list 524 have the right to read from and to write to (i.e. add contacts to) the address data 300.

The rule 506 includes an ID 528 of "3" and a contact list 530 that specifies *@example.com as contact data. This contact data includes a wild card that indicates that the rule 506 applies to all contact data (whether or not found in the group representation 300) whose address ends in @example.com. The rule 506 also includes rights 532 indicating that all users (whether or not they are contacts in the group) whose address ends in @example.com may read from the address data 300. Wild cards may be used in a number of different ways. For example, a wild card may be used such that the contact list in a rule contains a single contact "*". Thus, the rule applies to all users, not only those specified in the address data of the group and/or those whose addresses conform to other requirements such as ending with @example.com. A wild card may also be used, for example, to allow addresses of the format user@*, where the rule applies to all users whose address begins with user@ regardless of domain name. Wild cards may be used in a number of other ways, and contact data may include zero, one or more wild cards.

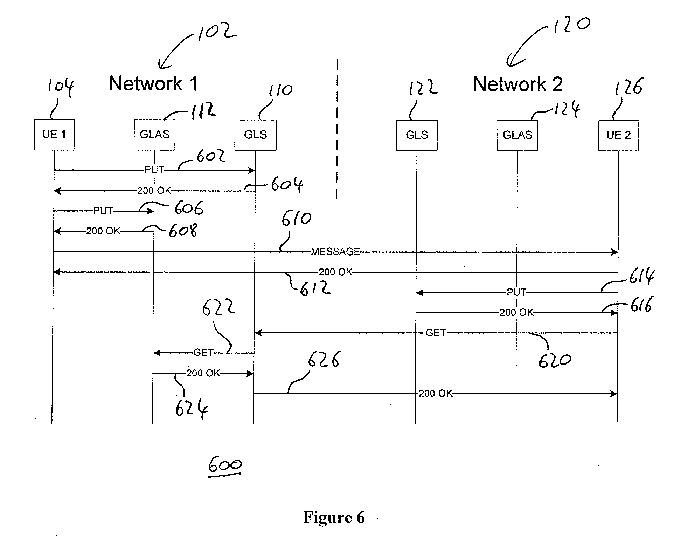

Figure 6 shows an example 600 of the flow of messages in the networks 102 and 120 when a user of the user equipment 104 (Alice) adds contact data associated with a user of user equipment 126 to Alice's group, shares the group with the user of the user equipment 126 (Bob), and Bob subsequently downloads details of the group.

First, Alice adds Bob to her group (for example, a group associated with Alice's friends). Alice's user equipment 104 sends a message 602 to Alice's groups and lists server (GLS) 110. The message 602 is an XCAP PUT request that amends the XML representation of the address data to add Bob's contact data to the address data. In other embodiments, however, any suitable type of message may be used in place of this message.

Once Bob's contact data has been added to Alice's group, that is, Alice's address data, the GLS 110 sends an XCAP 200 OK response 604 to Alice's user equipment 104 to indicate that Bob's contact data was added to the group successfully.

Alice's user equipment 104 also sends an XCAP PUT request 606 to the GLAS 112 to instruct the GLAS 112 to give Bob the right to read from the group. The GLAS 112 then updates the embodiment of the access rules associated with Alice's address data to indicate that Bob has the right to read from the address data. This may include, for example, creating a new rule to indicate Bob's rights, or adding Bob's contact data to the contact list of an existing rule that contains other contact data with the right to read from the address data.

The GLAS 112 sends an XCAP 200 OK response 608 to Alice's user equipment 104 to indicate that Bob's rights were updated successfully.

Alice's user equipment 104 sends a message 610 to Bob's user equipment 126 to indicate to Bob that Alice has shared the address data with him. The message can be implemented using any form of messaging such as, for example, a session initiation protocol (SIP) instant message. This is merely one example implementation of the message 610, and other forms of communication and/or message may be used in alternative embodiments. The message 610 is shown as being sent directly from Alice's user equipment 104 to Bob's user equipment 126. The message may be routed through one or more networks, although this routing is not shown in figure 6 for clarity. Bob's user equipment 126 sends a SIP 200 OK response 612 to Alice's user equipment 104 to indicate that the message 610 was received successfully. Again, the SIP 200 OK message 612 is an example implementation, and other forms messaging may be used in alternative embodiments.

Bob's user equipment 126 then sends an XCAP PUT request 614 to Bob's GLS 122 on network 120. This adds a reference to Alice's address data stored on GLS 110 to GLS 122, so that, for example, when Bob's user equipment 126 communicates with Bob's GLS 122 to download details of Bob's lists and groups, that is, Bob's address data, Bob's user equipment 126 is also aware that Bob has access to Alice's address data stored on Alice's GLS 110.

Once the GLS 122 adds this reference, the GLS 122 returns an XCAP 200 OK response 616 to Bob's user equipment 126 to indicate that the reference was added successfully. Alice's address data is now shared with Bob.

When Bob wishes to download details of Alice's address data, for example when Bob has activated his user equipment 126 causing, for example, Bob's mobile telephone to perform network registration with Bob's mobile network, Bob's user equipment 126 sends an XCAP GET request 620 to Alice's GLS 110, requesting details of Alice's address data. Alice's GLS 110 sends an XCAP GET request 622 to the GLAS 112 to determine whether Bob has the right to read from Alice's address data. The GLAS 112 checks the rules in the embodiment of the access rules associated with Alice's address data to determine whether Bob has the right to read from Alice's address data. It may do this by searching all the rules associated with the representation of Alice's address data to find rules where Bob is specified in the contact list. The access rights of any rules found may be examined to determine Bob's rights in respect of Alice's address data.

If the GLAS 112 determines that Bob has the right to read from Alice's address data, then the GLAS 112 sends an XCAP 200 OK response 624 to the GLS 110, indicating that Bob has the right. The GLS 110 then sends an XCAP 200 OK response 626 to Bob's user equipment 126. The response 626 contains details of Alice's address data, such as, for example, a list of the contact data in the address data and/or the properties of the address data. Bob's user equipment then contains details of Alice's address data. Bob has, thus, accessed the address data owned by another user (Alice), as Bob does not own Alice's address data.

If Bob does not have the right to read from Alice's address data, then the response 624 from the GLAS 112 to the GLS 110 will indicate as such. Therefore, the response 626 from the GLS 110 to Bob's user equipment 126 will indicate that Bob does not have the right to access the address data. Bob may then not be able to access details of Alice's address data.

Bob's user equipment 126 may request that only certain information is provided by the GLS 110, such as details of one or more specific contact data and/or details of properties of the address data. The information required by Bob's user equipment 126 may be specified in, for example, the request 620 sent by Bob's user equipment 126 to Alice's GLS 110.

Alice or Bob, or any of the other contacts in Alice's address data, or any other user that has access to Alice's address data, may use the details of the contacts in Alice's address data accordingly. For example, a user and/or contact may initiate a communication with one or more of the other contacts in the address data via respective contact data. A contact's user equipment may display the contact data in the address data, and the contact may manipulate the contact data in the address data if the contact has sufficient rights, for example by adding or deleting one or more contact data.

Alice may also choose to share her address data with more than one contact at a time. In this case, the message 610 may be sent to multiple recipients. Each recipient then stores a reference to Alice's address data on their own GLS and may subsequently send requests to Alice's GLS 110 to download details of the contacts in the address data.

Although contacts and users are associated with their own GLS and GLAS, each GLS and GLAS may be associated with multiple users and contacts. Furthermore, a GLS and GLAS may be implemented as different functions on a single server. Each GLS and GLAS may be implemented as multiple servers that appear to the network, for example, as a single server. If the GLS and GLAS are implemented on separate servers or groups of servers, each server or group of servers can be optimized for the amount and/or type of expected traffic to that server or group. However, the implementation of the GLS and GLAS functions, whether on a single server or group of servers, or on separate servers or groups of servers, may be based on one or more of network design, cost, number of subscribers, expected volume of traffic, expected peak traffic and any other factors.

Alice may wish to transfer ownership of address data or list to another user, for example another contact whose contact details are in the address data or list. Alice may wish to do this, for example, if Alice is leaving the address data, that is, leaving a group. If the GLS of the new owner is not Alice's GLS, then details of the address data or list must be transferred to the GLS of the new owner. Alternatively, a reference to the address data on Alice's GLS may be added to the GLS of the new owner. Similarly, the access rights representation may need to be transferred to another GLAS, or a reference may be required on the new GLAS. If address data or list is transferred to another GLS, then it may be necessary to update the references to the address data or list in the GLS of the contact data in the address data, so that the correct GLS is contacted when the contacts wish to access the address data.

Each GLS and/or GLAS may be implemented, for example, as an XML Document Management Server (XDMS), such as a HP OpenCall XDMS. An XDMS can store XML documents, such as XML representations of contact lists and address data and XML representations of access rights, and protocols such as XCAP can be used to access and/or manipulate the XML documents. The HP OpenCall XDMS supports both XCAP and SIP. Therefore, when using the HP OpenCall XDMS, or when implementing other embodiments of the invention, any communication can comprise a SIP communication and/or an XCAP communication, and/or any other communication protocol as appropriate.

In certain embodiments, where a user wishes to download information on a shared address data, the user's user equipment may instead download the information only when there has been a change to the information since the last download, such as, for example, one or more contact data added to and/or removed from the address data. This may save on communication bandwidth between the user equipment and the GLS associated with the owner of the address data. The user equipment may determine whether the address data information has changed since the last download by, for example, requesting a timestamp of the last change from the GLS and comparing the timestamp with a timestamp of the information that was last downloaded. If the timestamp of the last change from the GLS is later than the timestamp of the information that was last downloaded, the updated information must be downloaded in part or in full.

In certain embodiments, a user may subscribe to address data so that the user receives notifications when there are changes to the address data, such as the addition or removal of one or more contact data. This may be implemented, for example, by the user requesting a right to be stored in a rule in a representation on the appropriate GLS. The right will enable the user to receive the notifications. In some embodiments, it may be required that the user must have read access to the address data before the user can request that a right is added that the user will receive notifications.

Embodiments of the invention allow contact lists and/or address data to be shared without duplication of the information in the list or address data. Therefore, the list is stored only at a single location, and is not duplicated to multiple locations. Furthermore, only a single instance of the address data or list can be read from and/or modified by the owner of the address data and/or other contact data and/or users that have rights to read from and/or modify the address data or list. Therefore, each user that accesses the address data or list accesses the most up to date version of the address data or list, and there is no problem of separate copies of the address data list becoming out of date or being amended to include different information.

Communication between elements in a network used by embodiments of the invention, for example the network 102 and/or 120 shown in figure 1, may be over a direct link as shown or may be via one or more other network elements (not shown). Furthermore, the communications may be implemented as single- or multi-channel links, and each communication described may require, for example, a single communication packet or multiple packets. Each communication link shown may comprise one or more wired or wireless links or a mixture of wired and wireless links.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of managing access to address data that is accessible via a plurality of communication devices; the method comprising the steps of at least one of accessing or establishing at least one access rule, associated with at least one communication device of the plurality of communication devices, for influencing access to the address data; and controlling access to the address data according to the at least one access rule associated with the at least one communication device.

2. A method as claimed in claim 1 in which the steps of at least one of accessing or establishing at least one access rule associated with the at least one communication device comprises the steps of at least one of accessing or establishing plurality of access rules selectively associated with respective communication devices of the plurality of communication devices.

3. A method as claimed in any preceding claim in which the at least one access rule influences at least one of (a) reading at least a portion of the address data, (b) writing to the address data, (c) modifying at least a portion of the address data, (d) deleting at least a portion of the address data, (e) distributing at least a portion, or the whole, of the address data, and (f) updating the address data.

4. A method as claimed in any preceding claim further comprising the step of associating the at least one access rule with a communication device having contact data that has been added to, or at least being intended to be added to, the address data.

5. A method as claimed in claim 4 further comprising the step of sending a message to at least one communication device of the plurality of communication devices; the message bearing an indication that the contact data of the communication device has been added to the address data.

6. A method as claimed in any preceding claim comprising the step of creating the address data including expressing the address data in a portable, communication device independent, data structure.

7. A method as claimed in any preceding claim further comprising the step of defining at least one property associated with the address data for influencing interactions with the address data.

8. A system comprising means to implement a method as claimed in any preceding claim.

9. A program comprising instructions arranged, when executed, to implement a method or system as claimed in any preceding claim.

10. Machine-readable storage storing a program as claimed in claim 9.
